# EUROPEAN PATENT SPECIFICATION

(11) **EP 3 848 146 B1**
(45) Date of publication and mention of the grant of the patent: **10.12.2025**
(21) Application number: 19858108.4
(22) Date of filing: 05.09.2019
(51) Int. Cl.: B23K 26/073, B23K 26/064, B23K 26/067, B23K 26/082, B23K 26/21, B23K 26/322, B23K 26/06, B23K 101/34, B23K 26/26

(54) **WELDING METHOD**
SCHWEISSVERFAHREN
PROCÉDÉ DE SOUDAGE

(30) Priority: 05.09.2018 JP 2018166399
(43) Date of publication of application: 14.07.2021
(73) Proprietor: FURUKAWA ELECTRIC CO., LTD., Chiyoda-ku Tokyo 100-8322 (JP)
(72) Inventor: KAYAHARA, Takashi, Tokyo 100-8322 (JP); NISHII, Ryosuke, Tokyo 100-8322 (JP); ASANUMA, Satoshi, Tokyo 100-8322 (JP); YASUOKA, Tomomichi, Tokyo 100-8322 (JP); SHIGEMATSU, Takashi, Tokyo 100-8322 (JP)
(74) Representative: SSM Sandmair
(86) International application number: PCT/JP2019/035075
(87) International publication number: WO 2020/050379

(56) References cited:
- EP-B1- 1 591 187
- WO-A1-2017/035728
- WO-A1-2017/103149
- DE-A1- 102004 050 819
- JP-A- 2006 326 640
- JP-A- 2012 254 481
- JP-A- 2015 205 327
- JP-A- H04 138 888
- US-A1- 2005 098 260
- US-B1- 6 608 278

## Description

### Field

The present invention relates to a welding method (see, for example, WO 2017/103149 A1, on which the preamble of claim 1 is based).

### Background

Laser welding is known as one of the methods for welding a workpiece made of metal material such as iron or copper. Laser welding is a welding method in which a welding area of the workpiece is irradiated with a laser beam and the welding area is melted by the energy of the laser beam. A pool of molten metal material called a molten pool is formed in the welding area irradiated with the laser beam, and then welding is performed by solidifying the molten pool.

In some cases, two plate materials are layered to form a workpiece, and the plate materials are joined by welding to perform lap welding. In this case, when the plate material is a plating plate material in which a plating layer is formed on the surface of the preform, for example, a galvanized steel plate, the plating layer evaporates to become a gas when the steel material melts. This occurs when the boiling point of the plating layer is lower than the melting point of the preform. The gas generated in this way may disturb the molten pool and deteriorate the flatness of the surface of the molten pool. Such deterioration of the flatness of the surface of the molten pool causes welding defect. In addition, since part of the molten liquid constituting the molten pool is blown off by the pressure of this gas, an underfill may occur in the workpiece after the molten pool is solidified.

To solve the problem of melting defect as described above, a technique is disclosed in which a protrusion is formed on a first plated steel plate, and the top of the protrusion is brought into contact with the surface of a second plated steel plate when the first and second plated steel plates are layered, and the first plated steel plate is irradiated with a laser beam from the surface opposite the top of the protrusion to weld the first and second plated steel plates (see, for example, Patent Literature 1).

### Citation List

### Patent Literature

Patent Literature 1: Japanese Laid-open Patent Publication No. H07-155974

### Summary

### Technical Problem

However, the above-mentioned technique has a problem that an additional process of forming a protrusion on one of the plated steel plates is required.

The present invention has been made in view of the above, an object of the present invention is to provide a welding method capable of suppressing the occurrence of the welding defect during lap welding of plating plate materials.

### Solution to Problem

To solve the above problem and attain the object, a welding method according to claim 1 is disclosed. Embodiments of the present invention are disclosed in the dependent claims.

### Advantageous Effects of Invention

According to the present invention, it is possible to suppress the occurrence of the welding defect during lap welding of plating plate materials.

### Brief Description of Drawings

FIG. 1 is a schematic diagram illustrating a schematic configuration of a laser welding apparatus according to a first embodiment.
FIG. 2 is a schematic diagram illustrating a diffractive optical element.
FIG. 3A is a schematic diagram illustrating a processing laser beam and swing.
FIG. 3B is a diagram illustrating an example of power distribution in the radial direction of the cross section of each beam included in the processing laser beam.
FIG. 4A is a diagram illustrating a cross-sectional photograph of a comparative example of a welded workpiece.
FIG. 4B is a diagram illustrating a cross-sectional photograph of an example of the welded workpiece.
FIG. 5A is a schematic diagram illustrating an example of the power distribution shape of the processing laser beam.
FIG. 5B is a schematic diagram illustrating an example of the power distribution shape of the processing laser beam.
FIG. 5C is a schematic diagram illustrating an example of the power distribution shape of the processing laser beam.
FIG. 5D is a schematic diagram illustrating an example of the power distribution shape of the processing laser beam.
FIG. 5E is a schematic diagram illustrating an example of the power distribution shape of the processing laser beam.
FIG. 5F is a schematic diagram illustrating an example of the power distribution shape of the processing laser beam.
FIG. 6A is a schematic diagram illustrating an example of the power distribution shape of the processing laser beam.
FIG. 6B is a schematic diagram illustrating an example of the power distribution shape of the processing laser beam.
FIG. 6C is a schematic diagram illustrating an example of the power distribution shape of the processing laser beam.
FIG. 6D is a schematic diagram illustrating an example of the power distribution shape of the processing laser beam.
FIG. 6E is a schematic diagram illustrating an example of the power distribution shape of the processing laser beam.
FIG. 7 is a schematic diagram illustrating a schematic configuration of a laser welding apparatus according to a second embodiment.
FIG. 8A is a schematic diagram illustrating an example of a power distribution shape of a processing laser beam.
FIG. 8B is a schematic diagram illustrating an example of the power distribution shape of the processing laser beam.
FIG. 9A is a schematic diagram illustrating an example of a swing of the processing laser beam.
FIG. 9B is a schematic diagram illustrating an example of the swing of the processing laser beam.

### Description of Embodiments

Hereinafter, embodiments of the present invention will be described in detail with reference to the accompanying drawings. The present invention is not limited to the embodiments described below. Further, in the description of the drawings, the same or corresponding elements are appropriately assigned the same reference numerals.

### (First embodiment)

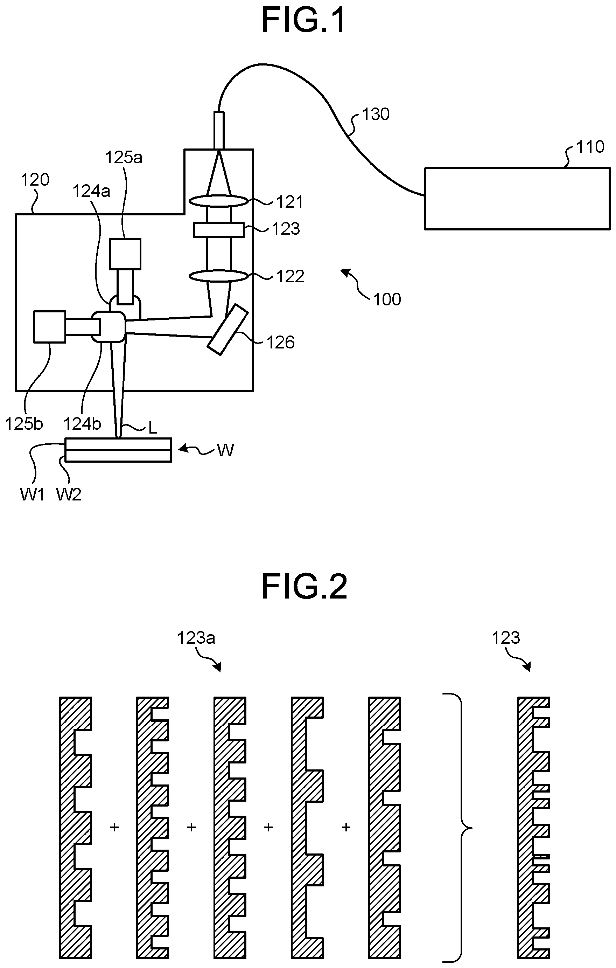

FIG. 1 is a schematic diagram illustrating a schematic configuration of the laser welding apparatus according to a first embodiment. A laser welding apparatus 100 includes a laser system 110, an optical head 120, and an optical fiber 130 that connects the laser system 110 and the optical head 120. Further, a workpiece W has a configuration in which two galvanized steel plates W1 and W2, which are plating plate materials, are layered. The galvanized steel plate W1 has galvanized layers formed on both surfaces of a steel plate, which is a preform. The galvanized steel plate W2 also has galvanized layers formed on both surfaces of a steel plate, which is a preform. The galvanized layer has a boiling point lower than the melting point of the steel plate.

The laser system 110 is configured to be capable of outputting, for example, a laser beam having a power of several kW. For example, the laser system 110 may include a plurality of semiconductor laser elements inside, and may be configured to be able to output a multi-mode laser beam having a power of several kW as the total output of the plurality of semiconductor laser elements. Further, the laser system 110 may include various laser beam sources such as a fiber laser, a YAG laser, and a disk laser. The optical fiber 130 guides the laser beam output from the laser system 110 and inputs the laser beam to the optical head 120.

The optical head 120 is an optical device that radiates the laser beam input from the laser system 110 toward the workpiece W. The optical head 120 includes a collimating lens 121, a condensing lens 122, and a diffractive optical element 123. The collimating lens 121 is an optical system that converts the input laser beam into collimated light. The diffractive optical element 123 is an optical element that forms a beam shape of laser beams that have been collimated as described later to generate a processing laser beam L, and is an aspect of a beam shaper. The condensing lens 122 is an optical system that condenses the processing laser beam L, with which the workpiece W is irradiated.

The optical head 120 has a galvano scanner mounted between the condensing lens 122 and the workpiece W in order to sweep the processing laser beam L while irradiating the workpiece W with the processing laser beam L. The galvano scanner is a device that can move the position which is irradiated with the processing laser beam L on the workpiece W without moving the optical head 120 by controlling the angles of two mirrors 124a and 124b to sweep the processing laser beam L. The optical head 120 includes a mirror 126 that guides the processing laser beam L emitted from the condensing lens 122 to the galvano scanner. The angles of the mirrors 124a and 124b of the galvano scanner are changed by motors 125a and 125b, respectively. The motors 125a and 125b are driven by a driver (not illustrated).

As illustrated conceptually in FIG. 2, the diffractive optical element 123 integrally includes a plurality of diffraction gratings 123a having different periods. The diffractive optical element 123 can form a beam shape by bending or superimposing the input laser beam in the direction affected by each diffraction grating.

The diffractive optical element 123 divides the laser beam input from the collimating lens 121 into a plurality of beams (three in the first embodiment) to generate the processing laser beam L. The processing laser beam L has a power distribution shape in which three beams are disposed along a predetermined direction in a plane perpendicular to the light traveling direction. These beams constitute a power region in the processing laser beam L. The power region is a region having power that contributes to melting of the workpiece W in a plane perpendicular to the light traveling direction of the processing laser beam L. However, it is not always necessary for each power region to have the power to melt the workpiece W independently. It is sufficient that each power region can melt the workpiece W by the influence of the energy given to the workpiece W by the other power regions.

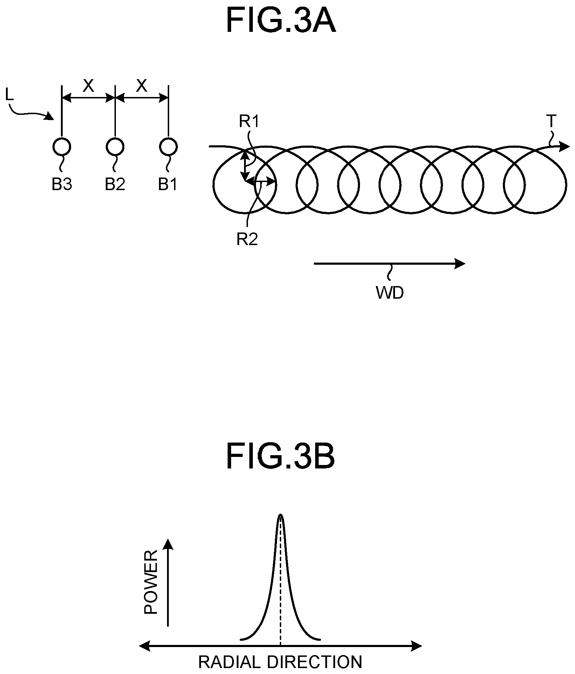

As illustrated in FIG. 3A, the processing laser beam L includes three beams B1, B2, and B3 whose light traveling direction is perpendicular to the paper surface. Each of the beams B1, B2, and B3 has a Gaussian-shaped power distribution in the radial direction of the beam cross section, as illustrated in FIG. 3B. The beams B1, B2, and B3 are disposed linearly along a welding direction WD, which is a predetermined direction. The line connecting the beams B1, B2, and B3 extends in the welding direction WD. Here, the welding direction WD is a direction in which the workpiece W is welded, and corresponds to the direction in which the welding bead is formed. Further, the Gaussian shape in the present description is not limited to a shape that is exactly a Gaussian shape, but includes a shape that can be approximated by a Gaussian shape.

The beam diameter of each of the beams B1, B2, and B3 is defined as a diameter of a region having a peak and an intensity of 1/e² or more of the peak intensity. In the case of a non-circular beam, the length of a region having an intensity of 1/e² or more of the peak intensity in a direction perpendicular to the sweep direction is defined as a beam diameter in this description. Beam power is defined as the sum of the power in the region where the intensity is 1/e² or more of the peak intensity.

Further, it is preferable that the power distribution of the beams B1, B2, and B3 have a sharp shape to some extent. Since the melting depth when melting the workpiece W can be deepened when the beams B1, B2, and B3 have a sharp power distribution to some extent, welding strength can be secured, so that the occurrence of the welding defect can be more preferably suppressed. When the beam diameter is used as an index of the sharpness of the beams B1, B2, and B3, the beam diameters of the beams B1, B2, and B3 are preferably 600 µm or less, more preferably 400 µm or less. When the beams B1, B2, and B3 have a sharp shape, the power for achieving the same melting depth can be reduced and the processing speed can be increased. Therefore, it is possible to reduce the power consumption of the laser welding apparatus 100 and improve the processing efficiency.

Note that the beam diameter can be adjusted by appropriately setting the characteristics of the laser system 110, the optical head 120, and the optical fiber 130 to be used. For example, the beam diameter can be adjusted by setting the beam diameter of the laser beam input from the optical fiber 130 to the optical head 120, and setting the optical system such as the diffractive optical element 123 and the lenses 121 and 122.

When welding is performed by using the laser welding apparatus 100, first, the workpiece W having a configuration in which the galvanized steel plates W1 and W2 are layered is disposed in the region irradiated with the processing laser beam L. Subsequently, while irradiating the workpiece W with the processing laser beam L including the beams B1, B2, and B3 divided by the diffractive optical element 123, the processing laser beam L and the workpiece W are relatively moved to sweep the processing laser beam L, and a portion, of the workpiece W, irradiated with the processing laser beam L is melted and welded.

In the first embodiment, while the processing laser beam L is swept in the welding direction WD on the workpiece W, while being swung. Specifically, as illustrated in FIG. 3A, the processing laser beam L is swept in the welding direction WD while drawing a circle at a predetermined rotation frequency on the workpiece W. At this time, in the first embodiment, the positional relationship between the beams B1, B2, and B3 and the arrangement of them with respect to the welding direction WD are not changed. As a result, a locus T drawn by the processing laser beam L on the workpiece W is trochoidal. In the present description, when the processing laser beam L draws a trochoidal locus T on the workpiece W in this way, the processing laser beam L is said to wobble. A radius in the direction (hereinafter, appropriately referred to as the welding width direction) perpendicular to the welding direction WD of the circular portion in the locus T is represented by R1, and a radius in the welding direction WD is represented by R2.

In this way, when the processing laser beam L in which the three beams B1, B2, and B3 are disposed along the welding direction WD is swept while being swung in a manner of wobbling, the beam B1, the beam B2, and the beam B3 generate a molten pool that is gradually deepened in the workpiece W. That is, first, the beam B1 generates a molten pool with a certain depth, the beam B2 deepens the molten pool, and the beam B3 further deepens the molten pool. At the same time, the molten pool expands in the welding width direction due to the swing of the processing laser beam L.

Therefore, when the processing laser beam L is radiated, the molten pool is formed so as to be deepened relatively slowly in a relatively wide region on the surface of the workpiece W. Therefore, the galvanized layers formed on the galvanized steel plates W1 and W2 gradually are evaporated and gasified rather than rapidly. As a result, the generated gas does not disturb the molten pool, and the deterioration of flatness of the surface of the molten pool is also reduced. Also, melting occurs slowly in a relatively large region. For this reason, a gas discharge route is secured so that the gradually generated gas is sufficiently discharged from the surface of the molten pool, which has a relatively large surface area, and bubbles are less likely to remain after the molten pool has been solidified. As a result, the occurrence of the welding defect can be suppressed.

Specifically, since the layered surface of the galvanized steel plate W1 and the galvanized steel plate W2 located inside the workpiece W forms two layers with the galvanized layers formed on each surface being layered to, the amount of gas generated is large when the galvanized layers are evaporated. However, when the processing laser beam L is swept while being swung in a manner of wobbling, the gas is gradually generated and its discharge route is secured, so that it is possible to suppress the occurrence of the welding defect.

Further, when the molten pool reaches the back side of the workpiece W (the exposed surface of the galvanized steel plate W2) by the processing laser beam L, the gas can be discharged from the surface of the molten pool toward the back face, so that the occurrence of the welding defect can be further suppressed.

Note that, when, instead of the processing laser beam L as illustrated in FIG. 3A, the processing laser beam consisting of a single Gaussian beam having a peak with a relatively sharp power distribution is swept while being swung, the temperature rises sharply in a relatively narrow region on the surface of the workpiece W, and melting occurs to form the molten pool which is sharply deepened. Therefore, the galvanized layer in which the two layers overlap evaporates rapidly and sometimes explosively in a short time and gasifies. The generated gas may disturb the molten pool and deteriorate the flatness of the surface of the molten pool. Such deterioration of the flatness of the surface of the molten pool causes the welding defect such as abnormal shape of the welding bead. Further, since melting occurs rapidly in a relatively narrow region, the surface area of the molten pool is relatively small with respect to the amount of gas generated rapidly. Therefore, the gas may not be sufficiently discharged from the surface of the molten pool to the outside, and the welding defect such as bubbles remaining after the molten pool is solidified is likely to occur. Further, when the processing laser beam L as illustrated in FIG. 3A is swept linearly without being swung, the melting defect is likely to occur, in the same way.

Therefore, in the first embodiment, the surface area of the molten pool formed by melting the workpiece W can be increased by swinging the processing laser beam L having a predetermined power distribution shape, compared with the surface area of the molten pool when no swing is performed. As a result, the gas generated when the galvanized layer located inside the workpiece W is evaporated can be suitably discharged from the surface of the molten pool.

To suppress the welding defect even more effectively, for the beams B1, B2, B3, it is preferable to disperse the position which is irradiated with the beams B1, B2, and B3 so that the gas is gradually and sufficiently discharged from the surface of the molten pool. Specifically, it is preferable that the power distribution shape of the processing laser beam L be set so that the welding defect generated due to the gas has a level equal to or less than an allowable level to disperse the position which is irradiated with the beams B1, B2, and B3 so as to have the power distribution shape. That is, the power distribution shape of the processing laser beam L can be set by adjusting the power and the arrangement interval of the beams B1, B2, and B3. Here, the allowable level means a level that is allowable according to, for example, the required specifications for welding. Further, it is preferable to set the mode of the swing of the processing laser beam L so that the welding defect has a level equal to or less than the allowable level. In the case of wobbling, the mode of the swing is determined by the radii R1, R2, rotation frequency and the like. Further, it is preferable to set at least one of the power distribution shape and the swing mode.

To suppress the welding defect even more effectively, it is preferable to set at least one of the power distribution shape and the swing mode of the processing laser beam L depending on the characteristics of the workpiece W (material, base material thickness, plating layer thickness, etc.).

### (Examples 1 to 5, Comparative Example)

As an Example 1, a laser welding apparatus having the configuration illustrated in FIG. 1 was used to perform lap welding on a workpiece having a configuration in which two 1 mm thick electrogalvanized steel plates are layered. The laser beam output from the laser system has a Gaussian distribution, and its wavelength is 1070 nm. The power of the laser beam was set to 3 kW. Then, this laser beam was divided into three beams disposed linearly as illustrated in FIG. 3A by a diffractive optical element to generate a processing laser beam, and the workpiece was irradiated with the processing laser beam. Here, the rotation frequency when drawing a circle with the laser beam was 64 Hz, the radius R1 in the welding width direction was 0.5 mm, and the radius R2 in the welding direction was 0.5 mm. The sweeping speed of the laser beam for the workpiece in the welding direction was set to 20 mm/s. Further, a spacing X between the three beams was adjusted so that they were evenly spaced on the surface of the workpiece. The beam spacing X is the peak intensity spacing (see FIG. 3A).

Also, as a comparative example, a laser welding apparatus having a configuration in which the diffractive optical element is removed from the configuration illustrated in FIG. 1 was used to perform lap welding on a workpiece having a configuration in which two 1 mm thick electrogalvanized steel plates are layered. The laser beam output from the laser system has a Gaussian distribution, and its wavelength is 1070 nm. The power of the laser beam was set to 3 kW. Then, this laser beam was radiated to the workpiece via the optical head without wobbling. Here, the sweeping speed of the laser beam for the workpiece in the welding direction was set to 20 mm/s.

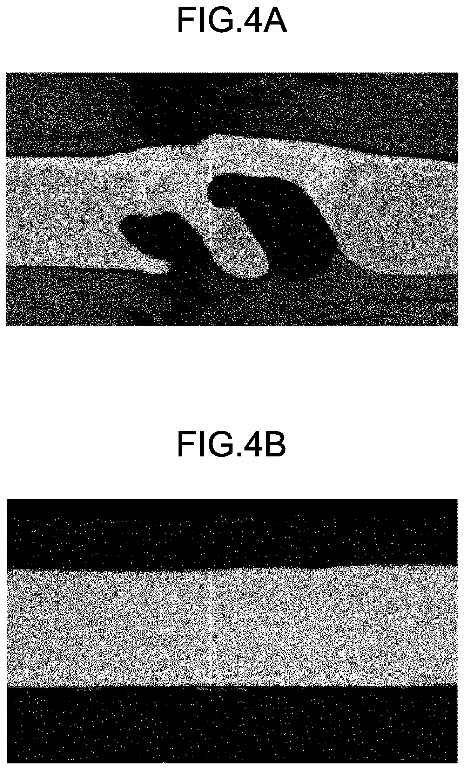

A hole was formed in the welding bead on the back face of the workpiece in comparative example. The workpiece was cut along the welding bead so as to include the hole, and part thereof was photographed. As depicted in the photograph in FIG. 4A, it was confirmed that the shape of the workpiece was deformed at the place where the hole was formed, and the shape of the hole was irregular and deep, compared with the thickness of the workpiece. It is conceivable that such holes and deformations were formed by the rapid evaporation of the galvanized layer.

On the other hand, no hole was formed in the workpiece in Example 1. The workpiece was cut along the welding bead, and part of it was photographed. As depicted in the photograph in FIG. 4B, it was confirmed that the welding area of the workpiece was in good condition with no holes or deformation.

Next, as Examples 2, 3, and 4, a laser welding apparatus having the configuration illustrated in FIG. 1 was used to perform lap welding on a workpiece having a configuration in which two 1 mm thick alloyed hot-dip galvanized steel plates (GA material) are layered. The laser beam output from the laser system has a Gaussian distribution, and its wavelength is 1070 nm. The power of the laser beam was set to 3 kW. Then, this laser beam was divided into three beams disposed linearly as illustrated in FIG. 3A by a diffractive optical element to generate a processing laser beam, and the workpiece was irradiated with the processing laser beam. Here, the rotation frequency when drawing a circle with the processing laser beam was set to 64 Hz, the radius R1 in the welding width direction is 0.5 mm (Example 2), 1 mm (Example 3) or 1.5 mm (Example 4), and the radius R2 in the welding direction was 0.5 mm. The sweeping speed of the processing laser beam for the workpiece in the welding direction was set to 20 mm/s.

When the welding beads of the workpiece in Examples 2, 3 and 4 were observed, it was confirmed that the appearance was good and the condition was good with no holes or deformations.

Next, as Example 5, under the same conditions as in Example 1, for two types with the radius R1 = R2 set to 0.5 mm and 0.25 mm, welding was performed with the beam-to-beam distance X being changed to 0.05 mm, 0.1 mm, 0.2 mm, 0.3 mm, 0.4 mm, 0.5 mm, 0.6 mm, 0.7 mm, 0.8 mm, 0.9 mm, 1.0 mm, 1.5 mm, 2.0 mm, or 2.5 mm. When the welding bead of each workpiece was observed, it was confirmed that the appearance was good and that the welding bead was in good condition with no holes or deformation in each case. Therefore, it was found that at least R1 = R2 should be set between 1/5 and 5 times X.

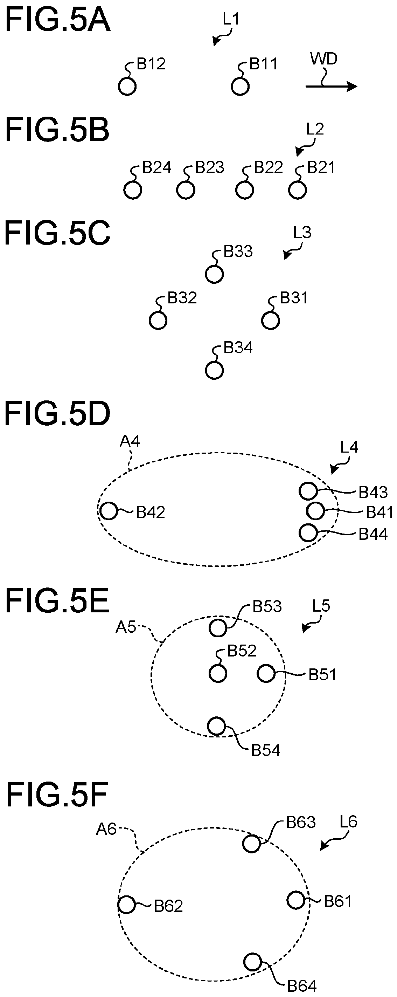

Subsequently, as Example 6, the laser beam was set to two beams as illustrated in FIG. 5A under the same conditions as in Example 1. The beam spacing X is the interval between the peak intensities of the beam B11 and the beam B12. The power ratio of the preceding beam B11 and beam B12 was 10 : 0, 9 : 1, 8 : 2, 7 : 3, 6 : 4, 5 : 5, 4 : 6, 3 : 7, 2 : 8, 1 : 9, and 0 :10, and for each power ratio, welding was performed with the beam-to-beam distance X being changed to 0.025 mm, 0.05 mm, 0.1 mm, 0.2 mm, 0.3 mm, 0.4 mm, 0.5 mm, 0.6 mm, 0.7 mm, 0.8 mm, 0.9 mm, or 1.0 mm. When observing the welding bead of the workpiece, defects such as holes and deformation were found in a case where the power ratio was 10 : 0 and 0 :10, but good appearance was observed in any of the other power ratios, and the good condition with no holes or deformation were confirmed.

Next, as Example 7, under the same conditions as in Example 1, lap welding was performed on the workpiece having a configuration in which an electrogalvanized steel plate having a thickness of 1 mm and a high-tensile steel plate having a thickness of 1 mm without a plating layer or a cold-rolled steel plate having a thickness of 1 mm without a plating layer were layered. Welding was performed on each workpiece when the beam was irradiated from the electrogalvanized steel plate side and when the beam was irradiated from the opposite side. In any case, when the welding bead of the workpiece was observed, it was confirmed that the appearance was good and the condition was good with no holes or deformation.

### (Example of power distribution shape)

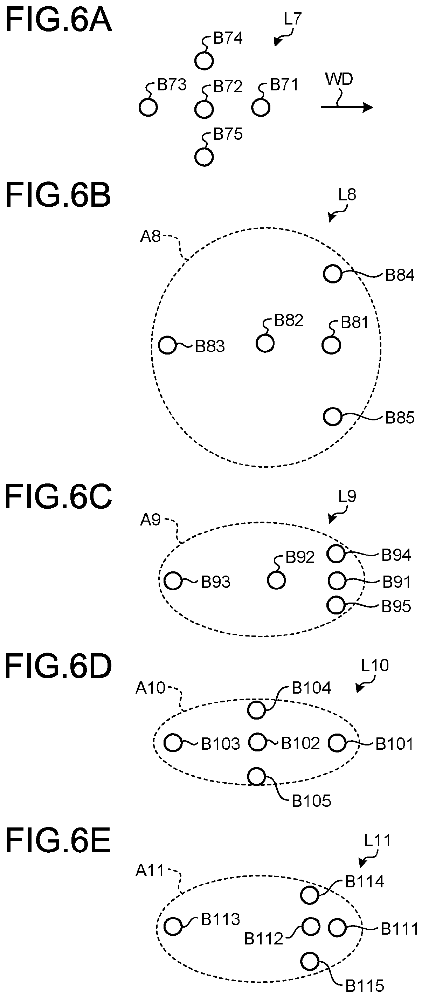

The power distribution shape of the processing laser beam is not limited to that illustrated in FIG. 3A. FIGS. 5A to 5F and 6A to 6E are schematic diagrams illustrating an example of the power distribution shape of the processing laser beam. In the examples illustrated in FIGS. 5A to 5F and 6A to 6E, the diffractive optical element 123 divides the laser beam into two or more beams to generate a processing laser beam. Note that, it is assumed that the welding direction WD is directed to the right side of the paper.

In the example illustrated in FIG. 5A, a processing laser beam L1 includes two beams B11 and B12, each of which has a Gaussian shape. The beams B11 and B12 are disposed along the welding direction WD in a plane perpendicular to the light traveling direction of the processing laser beam L1. The line connecting the beams B11 and B12 extends in the welding direction WD.

In the examples illustrated in FIGS. 5B to 5F, the processing laser includes four beams, each of which has a Gaussian shape. In the example illustrated in FIG. 5B, a processing laser beam L2 includes four beams B21, B22, B23, and B24. The beams B21, B22, B23, and B24 are disposed linearly along the welding direction WD in a plane perpendicular to the light traveling direction of the processing laser beam L2. The line connecting the beams B21, B22, B23, and B24 extends in the welding direction WD.

In the example illustrated in FIG. 5C, a processing laser beam L3 includes four beams B31, B32, B33, and B34. The beams B31 and B32 are disposed along the welding direction WD in a plane perpendicular to the light traveling direction of the processing laser beam L3. The line connecting the beams B31 and B32 extends in the welding direction WD. The beams B33 and B34 are disposed along the welding width direction in a plane perpendicular to the light traveling direction of the processing laser beam L3. The line connecting the beams B33 and B34 extends in the welding width direction. In FIGS. 5C, 5D to 5F, and 6A to 6E, which will be described later, the processing laser beam has a power distribution shape in which two or more power regions are disposed in the welding direction and, further, along the welding width direction. As a result, it is possible to preferably form a molten pool that is gradually deepened not only in the welding direction but also in the welding width direction.

Note that, in the processing laser beam L3, the beams B31 and B33 can be said to be disposed along the welding direction WD, or can be said to be disposed along the welding width direction. The reason is that the line connecting the beams B31 and B33 is neither perpendicular to the welding direction WD nor perpendicular to the welding width direction. In this way, when the line connecting the two beams is not perpendicular to a certain direction and forms an angle of 45 degrees or less in particular, it can be said that the two beams are disposed along that direction.

In the example illustrated in FIG. 5D, a processing laser beam L4 includes four beams B41, B42, B43, and B44. The beams B41 and B42 are disposed along the welding direction WD in a plane perpendicular to the light traveling direction of the processing laser beam L4. The line connecting the beams B41 and B42 extends in the welding direction WD. The beams B43 and B44 are disposed along the welding width direction in a plane perpendicular to the light traveling direction of the processing laser beam L4. The line connecting the beams B43 and B44 extends in the welding width direction. In addition, a region A4 is an elliptical representation of the approximate region where the beams B41 to B44 are disposed and the molten pool is formed.

In the example illustrated in FIG. 5E, a processing laser beam L5 includes four beams B51, B52, B53, and B54. The beams B51 and B52 are disposed along the welding direction WD in a plane perpendicular to the light traveling direction of the processing laser beam L5. The line connecting the beams B51 and B52 extends in the welding direction WD. The beams B53, B52, and B54 are disposed linearly along the welding width direction in a plane perpendicular to the light traveling direction of the processing laser beam L5. The line connecting the beams B53, B52, and B54 extends in the welding width direction. In addition, a region A5 is an elliptical representation of the approximate region where the beams B51 to B54 are disposed and the molten pool is formed.

In the example illustrated in FIG. 5F, a processing laser beam L6 includes four beams B61, B62, B63, and B64. The beams B61 and B62 are disposed along the welding direction WD in a plane perpendicular to the light traveling direction of the processing laser beam L6. The beams B63 and B64 are disposed along the welding width direction in a plane perpendicular to the light traveling direction of the processing laser beam L6. In addition, a region A6 is an elliptical representation of the approximate region where the beams B61 to B64 are disposed and the molten pool is formed.

In the examples illustrated in FIGS. 6A to 6E, the processing laser contains five beams, each of which has a Gaussian shape. In the example illustrated in FIG. 6A, a processing laser beam L7 includes five beams B71, B72, B73, B74, and B75. The beams B71, B72, and B73 are disposed linearly along the welding direction WD in a plane perpendicular to the light traveling direction of the processing laser beam L7. The line connecting the beams B71, B72 and B73 extends in the welding direction WD. The beams B74, B72, and B75 are disposed linearly along the welding width direction in a plane perpendicular to the light traveling direction of the processing laser beam L3. The line connecting the beams B74, B72, and B75 extends in the welding width direction.

In the example illustrated in FIG. 6B, a processing laser beam L8 includes five beams B81, B82, B83, B84, and B85. The beams B81, B82, and B83 are disposed linearly along the welding direction WD in a plane perpendicular to the light traveling direction of the processing laser beam L8. The line connecting the beams B81, B82 and B83 extends in the welding direction WD. The beams B84, B81, and B85 are disposed linearly along the welding width direction in a plane perpendicular to the light traveling direction of the processing laser beam L8. The line connecting the beams B84, B81, and B85 extends in the welding width direction. In addition, a region A8 is an elliptical representation of the approximate region where the beams B81 to B85 are disposed and the molten pool is formed.

In the example illustrated in FIG. 6C, a processing laser beam L9 includes five beams B91, B92, B93, B94, and B95. The beams B91, B92, and B93 are disposed linearly along the welding direction WD in a plane perpendicular to the light traveling direction of the processing laser beam L9. The line connecting the beams B91, B92 and B93 extends in the welding direction WD. The beams B94, B91, and B95 are disposed linearly along the welding width direction in a plane perpendicular to the light traveling direction of the processing laser beam L9. The line connecting the beams B94, B91, and B95 extends in the welding width direction. In addition, a region A9 is an elliptical representation of the approximate region where the beams B91 to B95 are disposed and the molten pool is formed.

In the example illustrated in FIG. 6D, a processing laser beam L10 includes five beams B101, B102, B103, B104, and B105. The beams B101, B102, and B103 are disposed linearly along the welding direction WD in a plane perpendicular to the light traveling direction of the processing laser beam L10. The line connecting the beams B101, B102 and B103 extends in the welding direction WD. The beams B104, B102, and B105 are disposed linearly along the welding width direction in a plane perpendicular to the light traveling direction of the processing laser beam L10. The line connecting the beams B104, B102, and B105 extends in the welding width direction. In addition, a region A10 is an elliptical representation of the approximate region where the beams B101 to B105 are disposed and the molten pool is formed.

In the example illustrated in FIG. 6E, a processing laser beam L11 includes five beams B111, B112, B113, B114, and B115. The beams B111, B112, and B113 are disposed linearly along the welding direction WD in a plane perpendicular to the light traveling direction of the processing laser beam L11. The line connecting the beams B111, B112 and B113 extends in the welding direction WD. The beams B114, B112, and B115 are disposed linearly along the welding width direction in a plane perpendicular to the light traveling direction of the processing laser beam L11. The line connecting the beams B114, B112, and B115 extends in the welding width direction. In addition, a region A11 is an elliptical representation of the approximate region where the beams B111 to B115 are disposed and the molten pool is formed.

Note that, in all of FIGS. 3A, 5A to 5F, and 6A to 6E, it is important to set the peak power of each beam so that the workpiece does not melt suddenly immediately after the irradiation.

Further, in FIGS. 5C and 6A, since a plurality of beams are disposed isotropically, there is an effect that the melting characteristics for the workpiece do not change even when the welding direction is changed in any direction.

The examples illustrated in FIGS. 3A, 5A to 5F, and 6A to 6E can be realized by appropriately designing the characteristics of the diffraction grating constituting the diffractive optical element 123.

### (Second embodiment)

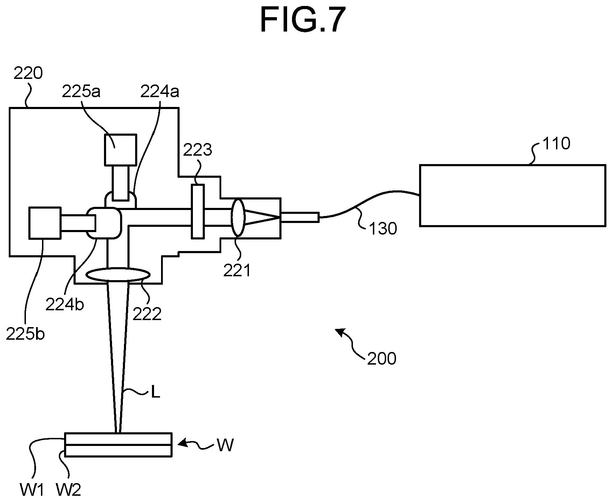

FIG. 7 is a schematic diagram illustrating a schematic configuration of the laser welding apparatus according to a second embodiment. A laser welding apparatus 200 irradiates the workpiece W with the processing laser beam L to weld the workpiece W. The laser welding apparatus 200 performs welding by the same operating principle as the laser welding apparatus 100. The laser welding apparatus 200 includes the laser system 110, an optical head 220, and the optical fiber 130, and has a configuration in which the optical head 120 is replaced with the optical head 220 in the laser welding apparatus 100. Therefore, in the following, only the device configuration of the optical head 220 will be described.

As in the optical head 120, the optical head 220 is an optical device that radiates the laser beam input from the laser system 110 toward the workpiece W. The optical head 220 includes a collimating lens 221, a condensing lens 222, and a diffractive optical element 223.

Further, the optical head 220 has a galvano scanner disposed between the collimating lens 221 and the condensing lens 222. The angles of mirrors 224a and 224b of the galvano scanner are changed by motors 225a and 225b, respectively. The motors 225a and 225b are driven by a driver (not illustrated). As in the optical head 120, the optical head 220 can move the position which is irradiated with the processing laser beam L without moving the optical head 220 by controlling the angles of the two mirrors 224a and 224b to sweep the processing laser beam L.

The diffractive optical element 223 is disposed between the collimating lens 221 and the condensing lens 222. As in the diffractive optical element 123, the diffractive optical element 223 forms the beam shape of the laser beam input from the collimating lens 221 to generate the processing laser beam L. As illustrated in FIG. 3A, the processing laser beam L generated by the diffractive optical element 223 has a power distribution shape in which three beams are disposed along the welding direction WD in a plane perpendicular to the light traveling direction. Note that, the diffractive optical element 223 may be designed to generate any of the processing laser beams L1 to LL11 illustrated in FIGS. 5A to 5F and 6A to 6E. As a result, the laser welding apparatus 200 can suppress the occurrence of the welding defect when welding the workpiece W.

Note that, in the above embodiment, the diffractive optical element divides the laser beam into a plurality of beams having the same peak power. However, the peak powers of a plurality of beams do not have to be exactly equal. Further, the power distribution of each beam is not limited to have the Gaussian shape, and may have another single-peak shape.

Further, the distance between the centers of adjacent beams among the divided beams is, for example, 20 times or less the beam diameter. Further, it is preferable that the molten regions of adjacent beams overlap. Here, the melting region by the beam is a region in which the workpiece has a temperature higher than the melting point due to the energy given by the beam, and is melt, and the area may be larger than the beam diameter depending on the thermal conductivity of the workpiece or the like. In this case, the peak powers of the beams may be equal, substantially equal, or different.

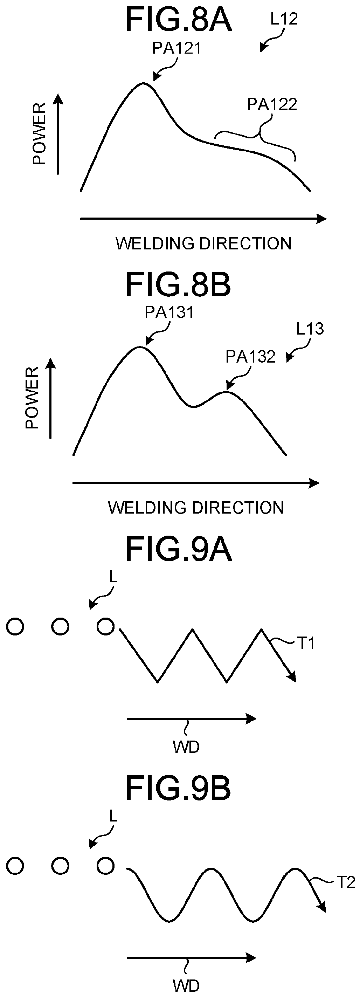

Further, in the above embodiment, the power distribution shape of the processing laser beam has a discrete power region due to the beams, but the plurality of power regions may be continuous with axisymmetric or asymmetric distribution. For example, FIG. 8A illustrates the power distribution shape of a processing laser beam L12 in the welding direction. In the power distribution shape of the processing laser beam L12, two power regions PA121 and PA122 disposed along the welding direction are continuous. The power region PA121 has a single-peak shape with a peak. Further, the power region PA122 has a shoulder shape. The boundary between the two power regions PA121 and PA122 in the curve of FIG. 8A can be defined as, for example, the position of an inflection point existing between them.

On the other hand, FIG. 8B illustrates the power distribution shape of a processing laser beam L13 in the welding direction. In the power distribution shape of the processing laser beam L13, two power regions PA131 and PA132 disposed along the welding direction are continuous. Each of the power regions PA131 and PA132 has a single-peak shape with a peak. The boundary between the two power regions PA131 and PA132 in the curve of FIG. 8B can be defined as, for example, the position of the minimum point existing between them. Both the processing laser beam L12 and L13 can be applied as the processing laser beam of the present invention. The processing laser beams L12 and L13 can be realized by using, for example, a combination of two or more lenses as a beam shaper. In addition, the processing lasers L12 and L13 illustrated in FIG. 8 and the processing lasers L and L1 to L11 illustrated in FIGS. 3, 5, and 6 can have a configuration in which two or more laser light beams output from two or more laser systems are combined in an optical head or the laser beam output from one laser systems is divided into two or more beams, and these beams are combined in the optical head. It should be noted that each of the two or more laser beams may be transmitted to the optical head by separate cores of one multi-core fiber. In these cases, the optical head and the multi-core fibers generates a processing laser beam so as to have a power distribution shape in which two or more power regions are disposed along a predetermined direction in a plane perpendicular to the light traveling direction from the laser light, and, for example, functions as a beam shaper.

Further, when the processing laser beam is swept in the welding direction on the workpiece while being swung, the locus drawn by the processing laser beam on the workpiece is not limited to be trochoidal. For example, as illustrated in FIG. 9A, a locus T1 drawn when the processing laser beam L is swept in the welding direction WD while being swung may be triangular wavy. Further, as illustrated in FIG. 9B, a locus T2 drawn when the processing laser beam L is swept in the welding direction WD while being swung may be sinusoidal. Although not illustrated, when the processing laser beam L is swept in the welding direction WD while being swung, the laser beam L may be swept while the locus is drawn in a figure eight when viewed from vertically or a figure eight when viewed from horizontally with respect to the welding direction WD. When the processing laser beam L draws a wavy locus in this way, the processing laser beam L may weave.

Further, in the above embodiment, the workpiece W has a configuration in which two galvanized steel plates are layered without a gap, but the present invention can be applied to even the workpiece having a configuration in which two or more galvanized steel plates are layered with a gap. Further, the plating plate material constituting the workpiece W is not limited to the galvanized steel plate, and the present invention can be applied to the plating plate material on which lap welding is to be performed.

Further, in the above embodiment, the optical heads 120 and 220 have a galvano scanner as a mechanism for sweeping the processing laser beam L while irradiating the workpiece W with the processing laser beam L, but they may have another known scanner that has a different mechanism than the galvano scanner. Further, a mechanism for swinging and sweeping the laser beam while irradiating the workpiece W with the laser beam may include a mechanism that changes the relative position between the optical head and the workpiece W. Examples of such a mechanism include a mechanism that moves the optical head itself and a mechanism that moves the workpiece. That is, the optical head may be configured so that the processing laser beam can be moved with respect to a fixed workpiece. Alternatively, the position which is irradiated with the processing laser beam from the optical head may be fixed, and the workpiece may be held movably with respect to the fixed processing laser beam.

Further, in order to control the optimum thermal energy to be given to the workpiece by the processing laser beam, the power of the processing laser may be controlled so as to change with time. The time waveform of the power of the processing laser may be controlled so as to be a rectangular wave, a triangular wave, a sine wave, or the like. By controlling the time waveform like this, the optimum thermal energy by which a suitable melting depth (depth of the molten pool) can be obtained without excessive evaporation of zinc vapor may be input by the processing laser beam, and a good welding bead may be obtained.

Further, the present invention is not limited to the above embodiments. The present invention also includes those configured by appropriately combining the constituent elements of the above-described embodiments. Further, further effects and modifications can be easily derived by those skilled in the art. Therefore, the broader aspect of the present invention is not limited to the above-described embodiments, and various modifications can be made without departing from the scope of appended claims.

### Industrial Applicability

The present invention can be used for laser welding.

### Reference Signs List

100, 200 LASER WELDING APPARATUS
110 LASER SYSTEM
120, 220 OPTICAL HEAD
121, 221 COLLIMATING LENS
122, 222 CONDENSING LENS
123, 223 DIFFRACTIVE OPTICAL ELEMENT
123a DIFFRACTION GRATING
124a, 124b, 126, 224a, 224b MIRROR
125a, 125b, 225a, 225b MOTOR
130 OPTICAL FIBER
A4, A5, A6, A8, A9, A10, A11 REGION
B1, B2, B3, B11, B12, B21, B22, B23, B24, B31, B32, B33, B34, B41, B42, B43, B44, B51, B52, B53, B54, B61, B62, B63, B64, B71, B72, B73, B74, B75, B81, B82, B83, B84, B85, B91, B92, B93, B94, B95, B101, B102, B103, B104, B105, B111, B112, B113, B114, B115 BEAM
L, L1, L2, L3, L4, L5, L6, L7, L8, L9, L10, L11, L12, L13 PROCESSING LASER BEAM
PA121, PA122, PA131, PA132 POWER REGION
T, T1, T2 LOCUS
W WORKPIECE
W1, W2 GALVANIZED STEEL PLATE
WD WELDING DIRECTION

## Claims

1. A welding method comprising:
layering two or more plate materials each including a plating plate material having a preform on a surface of which a plating layer is formed to form a workpiece (W), wherein the plating layer has a boiling point lower than the melting point of the preform;
disposing the workpiece (W) in a region to be irradiated with a processing laser beam including a plurality of beams;
generating the processing laser beam having a power distribution shape in which two or more power regions are disposed along a predetermined direction in a plane perpendicular to a light traveling direction, the power distribution shape being formed by disposing at least two of the plurality of beams along the predetermined direction in the plane;
irradiating a surface of the workpiece (W) with the processing laser beam;
and being **characterised by**:
moving the processing laser beam and the workpiece (W) relatively while performing the irradiation, and melting an irradiated area of the workpiece (W) to perform welding while sweeping the at least two of the plurality of beams of the processing laser beam in the predetermined direction on the workpiece (W) during a swing of the at least two of the plurality of beams of the processing laser beam in a manner of wobbling or weaving.

2. The welding method according to claim 1, wherein
a surface area of a molten pool formed by melting the workpiece (W) is widened by swinging the processing laser beam, compared with a surface area of the molten pool when no swing is performed, and a gas generated when a plating layer located inside the workpiece (W) is evaporated is discharged from a surface of the molten pool.

3. The welding method according to any one of claims 1 or 2, wherein
in the generating of the processing laser beam, the processing laser beam is generated so as to further have a power distribution shape in which two or more power regions are disposed along a width direction perpendicular to the predetermined direction in a plane perpendicular to the light traveling direction, by disposing at least two of the plurality of beams along the width direction in the plane.

4. The welding method according to any one of claims 1 to 3, wherein
at least one of a power distribution shape and a swing mode of the processing laser beam is set according to a characteristic of the workpiece (W).

5. The welding method according to any one of claims 1 to 4, wherein
a beam shaper (123) generates the processing laser beam.

6. The welding method according to claim 5, wherein
the beam shaper (123) is a diffractive optical element.

7. The welding method according to any one of claims 1 to 6, wherein
all of the two or more plate materials are plating plate materials.

## Patentansprüche

1. Schweißverfahren, das aufweist:
schichten von zwei oder mehr Plattenmaterialien, die jeweils ein Beschichtungsmaterial enthalten, das eine Vorform auf einer Oberfläche hat, von welcher eine Beschichtungsschicht ausgebildet wird, um ein Werkstück (W) auszubilden, wobei die Beschichtungsschicht einen Siedepunkt hat, der niedriger ist als der Schmelzpunkt der Vorform;
das Werkstück (W) wird in einem Bereich vorgesehen, um mit einem Verarbeitungslaserstrahl bestrahlt zu werden, der mehrere Strahlen enthält;
der Verarbeitungslaserstrahl wird erzeugt, wobei er eine Leistungsverteilungsform hat, in welcher zwei oder mehr Leistungsbereiche entlang einer vorbestimmten Richtung in einer Ebene senkrecht zu einer Lichtfortbewegungsrichtung vorgesehen sind, wobei die Leistungsverteilungsform ausgebildet wird, indem zumindest zwei der mehreren Strahlen entlang der vorbestimmten Richtung in der Ebene vorgesehen werden;
eine Oberfläche des Werkstücks (W) wird mit dem Verarbeitungslaserstrahl bestrahlt;
und **gekennzeichnet ist durch**:
relatives bewegen des Verarbeitungslaserstrahls und des Werkstücks (W), während die Bestrahlung durchgeführt wird, und ein bestrahlter Bereich von dem Werkstück (W) wird geschmolzen, um das Schweißen durchzuführen, während die mindestens zwei der mehreren Strahlen von dem Verarbeitungslaserstrahl in der vorbestimmten Richtung über das Werkstück (W) während einer Schwingung von den zumindest zwei der mehreren Strahlen von dem Verarbeitungslaserstrahl in einer webenden oder wackelnden Weise schwingen.

2. Schweißverfahren gemäß Anspruch 1, wobei
ein Oberflächenbereich von einem geschmolzenen Pool, der durch Schmelzen des Werkstücks (W) ausgebildet wird, durch Schwingen des Verarbeitungslaserstrahls erweitert wird, verglichen mit einem Oberflächenbereich von dem geschmolzenen Pool, wenn kein Schwingen durchgeführt wird, und ein Gas, das erzeugt wird, wenn eine Beschichtungsschicht, die innerhalb des Werkstücks (W) lokalisiert ist, verdampft wird, wird von einer Oberfläche des geschmolzenen Pools ausgelassen.

3. Schweißverfahren gemäß irgendeinem der Ansprüche 1 oder 2, wobei
bei der Erzeugung von dem Verarbeitungslaserstrahl der Verarbeitungslaserstrahl erzeugt wird, um so ferner eine Leistungsverteilungsform zu haben, bei welcher zwei oder mehr Leistungsbereiche entlang einer Breitenrichtung senkrecht zu der vorbestimmten Richtung in einer Ebene senkrecht zu der Lichtausbreitungsrichtung angeordnet sind, indem mindestens zwei der mehreren Strahlen entlang der Breitenrichtung in der Ebene vorgesehen werden.

4. Schweißverfahren gemäß irgendeinem der Ansprüche 1 bis 3, wobei zumindest eine Leistungsverteilungsform und ein Schwingungsmodus des Verarbeitungslaserstrahls gemäß einer Charakteristik von dem Werkstück (W) eingestellt werden.

5. Schweißverfahren gemäß irgendeinem der Ansprüche 1 bis 4, wobei ein Strahlformer (123) den Verarbeitungslaserstrahl erzeugt.

6. Schweißverfahren gemäß Anspruch 5, wobei der Strahlformer (123) ein diffraktives optisches Element ist.

7. Schweißverfahren gemäß irgendeinem der Ansprüche 1 bis 6, wobei sämtliche der zwei oder mehr Plattenmaterialien beschichtende Plattenmaterialien sind.

## Revendications

1. Procédé de soudage comprenant :
la superposition d'au moins deux matériaux en plaque, comprenant chacun un matériau en plaque de placage présentant une préforme sur une surface de laquelle une couche de placage est formée, pour former une pièce à usiner (W), la couche de placage présentant un point d'ébullition inférieur au point de fusion de la préforme,
la disposition de la pièce à usiner (W) dans une région devant être irradiée par un faisceau laser de traitement comprenant une pluralité de faisceaux,
la génération du faisceau laser de traitement présentant une forme de distribution de puissance dans laquelle au moins deux régions de puissance sont disposées le long d'une direction prédéterminée dans un plan perpendiculaire à une direction de propagation de lumière, la forme de distribution de puissance étant formée par disposition d'au moins deux faisceaux parmi la pluralité de faisceaux le long de la direction prédéterminée dans le plan,
l'irradiation d'une surface de la pièce à usiner (W) avec le faisceau laser de traitement ;
le procédé étant **caractérisé par** :
le déplacement relatif du faisceau laser de traitement et de la pièce à usiner (W) pendant l'irradiation, et la fusion d'une région irradiée de la pièce à usiner (W) pour réaliser un soudage pendant le balayage des au moins deux faisceaux de la pluralité de faisceaux du faisceau laser de traitement dans la direction prédéterminée sur la pièce à usiner (W) pendant un passage des au moins deux faisceaux de la pluralité de faisceaux du faisceau laser de traitement d'une manière oscillante ou ondulatoire.

2. Procédé de soudage selon la revendication 1, dans lequel
la superficie d'un bain de fusion formé par la fusion de la pièce à usiner (W) est élargie par le passage du faisceau laser de traitement, en comparaison de la superficie du bain de fusion existant lorsqu'aucun passage n'est réalisé, et un gaz généré lorsqu'une couche de placage située à l'intérieur de la pièce à usiner (W) est évaporée est évacué par la surface du bain de fusion.

3. Procédé de soudage selon l'une quelconque des revendications 1 et 2, dans lequel
lors de la génération du faisceau laser de traitement, le faisceau laser de traitement est généré de manière à présenter en outre une forme de distribution de puissance dans laquelle au moins deux régions de puissance sont disposées le long d'une direction de largeur perpendiculaire à la direction prédéterminée dans un plan perpendiculaire à la direction de propagation de lumière, par disposition d'au moins deux faisceaux de la pluralité de faisceaux le long de la direction de largeur dans le plan.

4. Procédé de soudage selon l'une quelconque des revendications 1 à 3, dans lequel
la forme de distribution de puissance et/ou le mode de passage du faisceau laser de traitement sont définis en fonction d'une caractéristique de la pièce à usiner (W).

5. Procédé de soudage selon l'une quelconque des revendications 1 à 4, dans lequel
un dispositif de mise en forme de faisceau (123) génère le faisceau laser de traitement.

6. Procédé de soudage selon la revendication 5, dans lequel
le dispositif de mise en forme de faisceau (123) est un élément optique diffractif.

7. Procédé de soudage selon l'une quelconque des revendications 1 à 6, dans lequel
les au moins deux matériaux en plaque sont tous des matériaux en plaque de placage.
